# FASCICULE DE BREVET EUROPEEN

(11) **EP 0 655 381 B1**
(45) Date de publication et mention de la délivrance du brevet: **24.09.1997**
(21) Numéro de dépôt: 94402663.2
(22) Date de dépôt: 22.11.1994
(51) Int. Cl.: B62D 1/16, F16B 21/10

(54) **Ensemble de colonne de direction, notamment pour véhicule automobile**
Lenksäuleneinheit, insbesondere für ein Kraftfahrzeug
Steering column unit, especially for a motor vehicle

(30) Priorité: 30.11.1993 FR 9314333
(43) Date de publication de la demande: 31.05.1995
(73) Titulaire: ECIA - EQUIPEMENTS ET COMPOSANTS POUR L'INDUSTRIE AUTOMOBILE, F-25400 Audincourt (FR)
(72) Inventeur: Hoblingre, André, F-25700 Valentigney (FR)
(74) Mandataire: Habasque, Etienne Joel Jean-François

(56) Documents cités:
- EP-A- 0 455 558

## Description

La présente invention concerne un ensemble de colonne de direction notamment pour véhicule automobie.

On connait déjà dans l'état de la technique, un certain nombre d'ensembles de colonnes de direction de ce type, qui comportent un arbre de direction monté déplaçable à rotation dans un corps de colonne.

Pour diverses raisons, liées par exemple à l'utilisation de paliers de guidage particuliers ou à la nécessité d'autoriser un certain déplacement axial de l'arbre dans le corps, on a équipé certains de ces ensembles de moyens d'immobilisation axiale temporaire de l'arbre dans le corps pour permettre le montage de l'ensemble de colonne sur le reste de la structure du véhicule.

Ceci est nécessaire pour permettre en particulier un positionnement correct de l'arbre par rapport au reste du mécanisme de direction du véhicule lorsque l'opérateur de montage relie l'extrémité correspondante de l'arbre au reste du mécanisme de direction du véhicule.

Différents modes de réalisation de ces moyens d'immobilisation axiale temporaire ont déjà été proposés.

On sait par exemple gràce à la demande EP-A-0 455 558 qui montre un ensemble de colonne conforme au préambule de la revendication 1, que ces moyens d'immobilisation peuvent comporter un téton d'immobilisation comprenant un anneau de préhension à l'une de ses extrémités et des surfaces de butée à l'autre de ses extrémités, ce téton d'immobilisation étant engagé dans un évidement du corps de manière que les surfaces de butée de celui-ci s'étendent de part et d'autre d'une collerette fixée sur l'arbre de direction pour immobiliser celui-ci dans le corps, en vue du montage de cet ensemble sur le véhicule.

Une fois ce montage réalisé, l'opérateur retire ce téton d'immobilisation ou le déplace vers une position escamotée de libération de la collerette et donc de l'arbre.

La position de cet arbre dans le corps est alors déterminée en fonction de la structure du mécanisme de direction et de l'ensemble de colonne.

Cependant, il a été constaté que cette structure présentait un certain nombre d'inconvénients de montage dans la mesure où il arrive de temps en temps que les opérateurs manipulent ces ensembles de colonne en utilisant l'anneau de préhension du téton d'immobilisation, ce qui pouvait se traduire par le déplacement de celui-ci vers sa position escamotée et donc par un défaut d'immobilisation de l'arbre dans le corps lors du montage de l'ensemble sur véhicule.

On conçoit que ceci peut avoir des répercutions extrêmement graves dans la mesure où la sécurité de la liaison de l'arbre au reste du mécanisme de direction du véhicule peut être compromise.

Le but de l'invention est donc de résoudre ces problèmes.

A cet effet, l'invention a pour objet un ensemble de colonne de direction notamment pour véhicule automobile, du type comportant un arbre de direction monté déplaçable à rotation dans un corps de colonne et des moyens d'immobilisation axiale temporaire de l'arbre dans le corps pour le montage de l'ensemble sur le reste de la structure du véhicule, déplaçables entre une position active d'immobilisation et une position escamotée, caractérisé en ce qu'il comporte des moyens de limitation du déplacement axial de l'arbre dans le corps lorsque les moyens d'immobilisation axiale temporaire sont en position escamotée.

L'invention sera mieux comprise à la lecture de la description qui va suivre, donnée uniquement à titre d'exemple et faite en se référant aux dessins annexés, sur lesquels :
- la Fig.1 représente une vue en coupe partielle d'un ensemble de colonne de direction selon l'invention, illustrant un premier mode de réalisation de moyens de limitation du déplacement axial de l'arbre dans le corps; et
- la Fig.2 représente une vue en coupe d'un téton d'immobilisation entrant dans le constitution d'un autre mode de réalisation d'un ensemble de colonne de direction selon l'invention.

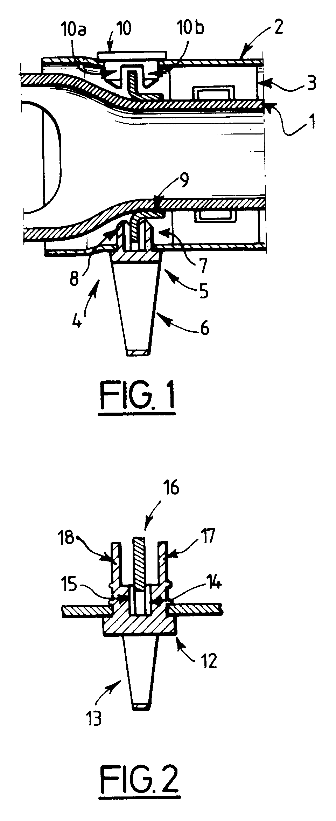

Ainsi qu'on peut le voir sur la Fig.1, un ensemble de colonne de direction selon l'invention notamment pour véhicule automobile, comporte de manière classique un arbre de direction désigné par la référence générale 1 monté déplaçable à rotation dans un corps de colonne désigné par la référence générale 2.

Des moyens de guidage 3 sont par exemple prévus entre l'arbre et le corps.

Par ailleurs, cet ensemble de colonne comporte également de manière classique des moyens 4 d'immobilisation axiale temporaire de l'arbre dans le corps pour le montage de cet ensemble sur le reste de la structure du véhicule, ces moyens d'immobilisation axiale temporaire étant déplaçables entre une position active repésentée sur cette figure 1 et une position escamotée.

En fait, ces moyens d'immobilisation axiale temporaire peuvent comporter un téton d'immobilisation 5 comprenant à l'une de ses extrémités un anneau de préhension 6 et à l'autre de ses extrémités, des surfaces de butée 7 et 8.

Ce téton d'immobilisation est engagé dans un évidement du corps et en position active de celui-ci, les surfaces de butée 7 et 8 s'étendent de part et d'autre d'une collerette 9 de l'arbre pour assurer une immobilisation axiale temporaire de cet arbre dans le corps lors du montage.

Une fois ce montage réalisé, l'opérateur peut retirer ce téton 5 pour libérer la collerette 9 et donc l'arbre de direction.

D'autres modes de réalisation de ce téton, connus dans l'état de la technique, comprennent des moyens tels que des crans permettant à l'opérateur de déplacer ce téton entre une position active telle que représentée et une position escamotée de libération de la collerette et donc de l'arbre.

Pour résoudre les différents problèmes de défauts de montage mentionnés précédemment, l'ensemble de colonne de direction selon l'invention comporte également des moyens de limitation du déplacement axial de l'arbre dans le corps lorsque les moyens d'immobilisation axiale temporaire sont en position escamotée.

Dans le mode de réalisation représenté sur cette figure 1, ces moyens de limitation du déplacement axial de l'arbre dans le corps comprennent une pièce rapportée sur le corps 2, désignée par la référence générale 10 et qui se présente par exemple sous la forme d'un bouchon inséré dans un évidement du corps.

Cette pièce rapportée comporte des surfaces de butée radiales 10a et 10b s'étendant de part et d'autre de la collerette 9 reliée à l'arbre et dont l'écartement autorise un certain déplacement axial de l'arbre dans le corps, ce déplacement axial autorisé étant limité pour garantir un montage correct de l'arbre de direction sur le reste du mécanisme de direction du véhicule et une liaison suffisamment fiable de cet arbre à ce mécanisme.

On conçoit alors que même si le téton d'immobilisation axiale temporaire 5 est retiré accidentellement par l'opérateur, le déplacement axial de l'arbre dans le corps est limité par la présence de ces moyens de limitation de déplacement, pour garantir la sécurité de la liaison de cet arbre au reste du mécanisme de direction.

Il va de soi bien entendu que d'autres modes de réalisation de ces moyens de limitation peuvent être envisagés.

En effet, la disposition des surfaces de butée de ces moyens d'immobilisation peut être inversée, c'est à dire que la collerette disposée sur l'arbre peut comporter deux surfaces de butée radiales s'étendant de part et d'autre d'une partie en saillie radiale de la pièce rapportée sur le corps.

Le mode de réalisation représenté sur la Fig.1 correspond à un ensemble de colonne dans lequel le téton d'immobilisation axiale temporaire 5 est retiré complétement par l'opérateur après montage de l'ensemble sur le reste de la structure du véhicule.

Sur la Fig.2, on a représenté un autre exemple de réalisation d'un ensemble de colonne de direction selon l'invention, dans lequel le téton 12 d'immobilisation axiale temporaire est déplacé par l'opérateur vers une position escamotée une fois que le montage de l'ensemble sur véhicule est réalisé.

Dans ce cas, ce téton 12 comporte toujours des moyens tels qu'un anneau de préhension 13 permettant à l'opérateur de le déplacer entre une position active représentée sur cette figure 2 et une position escamotée par déplacement radial.

Ce téton 12 comporte des premières surfaces de butée radiales d'immobilisation axiale temporaire de l'arbre dans le corps, désignées par les références 14 et 15 entre lesquelles s'étend la collerette 16 reliée à l'arbre.

Cependant, des secondes surfaces de butée désignées par les références 17 et 18 sont également prévues sur ce téton. Ces secondes surfaces de butée 17 et 18 présentent un écartement supérieur à celui des premières surfaces de butée 14 et 15 et permettent lorsque le téton est en position escamotée de limiter le déplacement axial de l'arbre dans le corps.

On conçoit en effet que lorsque le téton est en position escamotée, la collerette 16 et donc l'arbre de direction relié à cette collerette, possédent une certaine liberté de déplacement axial dans le corps, définie par l'écartement entre les secondes surfaces de butée 17 et 18 du téton.

On notera que dans l'exemple de réalisation illustré sur cette figure 2, les positions active et escamotée de ce téton d'immobilisation sont définies par exemple par des crans ménagés sur celui-ci et coopérant avec les bords de l'évidement correspondant du corps.

Bien entendu, une disposition inverse des surfaces de butée et de la collerette peut être envisagée, c'est à dire que la collerette peut être reliée au téton d'immobilisation, tandis que les surfaces de butée radiales sont reliées à l'arbre de direction.

## Revendications

1. Ensemble de colonne de direction notamment pour véhicule automobile, du type comportant un arbre de direction (1) monté déplaçable à rotation dans un corps de colonne (2) et des moyens (5;12) d'immobilisation axiale temporaire de l'arbre dans le corps pour le montage de l'ensemble sur le reste de la structre du véhicule, déplaçables entre une position active d'immobilisation et une position escamotée, caractérisé en ce qu'il comporte des moyens (10;12) de limitation du déplacement axial de l'arbre dans le corps lorsque les moyens d'immobilisation axiale temporaire sont en position escamotée.

2. Ensemble selon la revendication 1, caractérisé en ce que les moyens de limitation du déplacement axial de l'arbre dans le corps comprennent des surfaces de butée complémentaires (9,10a,10b; 16,17,18) de l'arbre et du corps.

3. Ensemble selon la revendication 2, caractérisé en ce que les surfaces de butée complémentaires de l'arbre (1) sont formées par une collerette (9) fixée sur l'arbre et s'étendant entre des surfaces de butée (10a, 10b; 17,18) d'un organe de limitation de déplacement (10;12) relié au corps (2).

4. Ensemble selon la revendication 3, caractérisé en ce que l'organe de limitation relié au corps est formé par une pièce (10) rapportée dans un évidement de celui-ci.

5. Ensemble selon la revendication 3, caractérisé en ce que les moyens d'immobilisation axiale temporaire comprennent un téton d'immobilisation (12) comportant des moyens de préhension (13) et des premières surfaces de butée (14,15) d'immobilisation axiale temporaire de l'arbre dans le corps lorsqu'il est en position active et des secondes surfaces de butée (17,18) pour limiter le déplacement axial de l'arbre dans le corps, lorsqu'il est en position escamotée.

## Claims

1. Steering column assembly, for a motor vehicle in particular, of the type comprising a steering shaft (1) mounted such that it is displaceable rotationally inside a column body (2) and means (5;12) of temporary axial immobilisation of the shaft in the body, for the fitting of the assembly on the rest of the structure of the vehicle, which are displaceable between an active immobilisation position and a retracted position, characterized in that it comprises means (10;12) of limitation of the axial displacement of the shaft in the body when the temporary axial immobilisation means are in the retracted position.

2. Assembly according to Claim 1, characterized in that the means of limitation of axial displacement of the shaft in the body comprise complementary stop surfaces (9,10a,10b; 16,17,18) of the shaft and of the body.

3. Assembly according to Claim 2, characterized in that the complementary stop surfaces of the shaft (1) are formed by a collar (9) attached to the shaft and extending between the stop surfaces (10a,10b; 17,18) of a displacement limitation member (10;12) connected to the body (2).

4. Assembly according to Claim 3, characterized in that the limitation member connected to the body is formed by a part (10) fitted into a recess of the latter.

5. Assembly according to Claim 3, characterized in that the temporary axial immobilisation means comprise an immobilisation stud (12) comprising grasping means (13) and first stop surfaces (14,15) for the temporary axial immobilization of the shaft in the body when it is in the active position and second stop surfaces (17,18) for limiting the axial displacement of the shaft in the body when it is in the retracted position.

## Patentansprüche

1. Lenksäuleneinheit insbesondere für Kraftfahrzeuge, bestehend aus einer Lenkwelle (1), die in einem Säulenkörper (2) drehbar montiert ist, und Einrichtungen (5; 12) zur vorübergehenden axialen Blockierung der Welle in dem Körper zum Zweck der Montage der Einheit an der übrigen Fahrzeugstruktur, die zwischen einer aktiven Blockierstellung und einer ausgerückten Stellung beweglich sind, dadurch gekennzeichnet, daß sie Einrichtungen (10; 12) besitzt, die die axiale Bewegung der Welle in dem Körper begrenzen, wenn die Einrichtungen zur vorübergehenden axialen Blockierung in ausgerückter Stellung sind.

2. Einheit nach Anspruch 1, dadurch gekennzeichnet, daß die Einrichtungen zur Begrenzung der axialen Bewegung der Welle im Körper einander ergänzende Anschlagsflächen (9, 10a, 10b; 16, 17, 18) der Welle und des Körpers umfassen.

3. Einheit nach Anspruch 2, dadurch gekennzeichnet, daß die ergänzenden Anschlagsflächen der Welle (1) von einem an der Welle befestigten Kragen (9) gebildet sind, der sich zwischen Anschlagsflächen (10a, 10b; 17, 18) eines mit dem Körper (2) verbundenen Bewegungsbegrenzungsorgans (10; 12) erstreckt.

4. Einheit nach Anspruch 3, dadurch gekennzeichnet, daß das mit dem Körper verbundene Begrenzungsorgan von einem Teil (10) gebildet ist, das in einer Aussparung des Körpers angebracht ist.

5. Einheit nach Anspruch 3, dadurch gekennzeichnet, daß die Einrichtungen zur vorübergehenden axialen Blockierung einen Blockierzapfen (12) aufweisen, der Greifeinrichtungen (13) und erste Anschlagsflächen (14, 15) besitzt, die die vorübergehende axiale Blockierung der Welle im Körper gewährleistet, wenn er in der aktiven Stellung ist, sowie zweite Anschlagsflächen (17, 18), um die axiale Bewegung der Welle im Körper zu begrenzen, wenn er in ausgerückter Stellung ist.
